# EUROPÄISCHE PATENTANMELDUNG

(11) **EP 0 553 500 A1**
(43) Veröffentlichungstag der Anmeldung: **04.08.1993**
(21) Anmeldenummer: 92122159.4
(22) Anmeldetag: 31.12.1992
(51) Int. Cl.: F16L 9/12, F16L 11/12, F16L 9/133

(54) **Kraftfahrzeug-Rohrleitung aus einem einschichtigen oder einem mehrschichtigen extrudierten Kunststoffrohr**

(30) Priorität: 29.01.1992 DE 4202399
(71) Anmelder: Technoflow Tube-Systems GmbH, D-34277 Fuldabrück (DE)
(72) Erfinder: Brunnhofer, Erwin, Dipl.-Ing., W-3501 Guxhagen (DE)
(74) Vertreter: Andrejewski, Walter, Dr.

(57) **Zusammenfassung**

Kraftfahrzeug-Rohrleitung (1) aus einem einschichtigen oder einem mehrschichtigen extrudierten Kunststoffrohr (2) vorgegebener Rohrwanddicke sowie mit vorgegebener Härte, Festigkeit, Bruchdehnung und Kerbschlagzähigkeit. Auf die Außenfläche des Kunststoffrohres (2) ist im Wege der Coextrusion bei der Herstellung des Kunststoffrohres (2) eine für die Sollfunktion unerhebliche Rißabsorptionsschicht (3) aus Kunststoff stoffschlüssig aufgebracht. Das Kunststoffrohr (2) ist durch die Dicke der Rißabsorptionsschicht (3) im gesamten Anwendungstemperaturbereich unempfindlich eingestellt gegen kraftfahrzeugübliche Lacke, insbes. Acryllacke, bei bestimmungsgemäßer oder zufälliger Lackierung.

## Beschreibung

Die Erfindung betrifft eine Kraftfahrzeug-Rohrleitung aus einem einschichtigen oder einem mehrschichtigen extrudierten Kunststoffrohr vorgegebener Rohrwanddicke mit vorgegebener Härte, Festigkeit, Bruchdehnung und Kerbschlagzähigkeit, welche Rohrleitung für eine vorgegebene Sollfunktion im gesamten Anwendungstemperaturbereich bis minus 40 °C eingerichtet ist und aus kraftfahrzeugüblichem Rohrwandwerkstoff besteht. Der Ausdruck Rohr umfaßt auch einen wenig flexiblen Schlauch. Die Sollfunktion ist beispielsweise die einer Kraftstoffleitung, einer Bremsleitung, einer Unterdruckleitung, einer Kühlwasserleitung, einer Steuerleitung oder dergleichen. Härte, Festigkeit, Bruchdehnung und Kerbschlagzähigkeit werden durch Auswahl des Rohrwandkunststoffes für die einschichtige oder mehrschichtige Rohrwand so eingerichtet, daß die Sollfunktionen erfüllt werden. Härte, Festigkeit, Bruchdehnung und Kerbschlagzähigkeit werden im folgenden auch als mechanische Qualitätsparameter bezeichnet. Typische Kraftfahrzeug-Rohrleitungen oder Kunststoffrohre für Kraftfahrzeug-Rohrleitungen sind z. B. beschrieben in DE 35 10 395, DE 37 15 251, DE 38 21 723 und DE 40 01 125. Die Kunststoffrohre solcher Kraftfahrzeug-Rohrleitungen erfahren im Zusammenhang mit der Extrusion regelmäßig auch eine Kalibrierung in besonderen, zumeist gekühlten Kalibrierwerkzeugen, z. B. im Wege einer sog. Vakuumkalibrierung.

Bei den bekannten Kraftfahrzeug-Rohrleitungen des eingangs beschriebenen Aufbaus, von denen die Erfindung ausgeht, definiert die einschichtige oder mehrschichtige Rohrwand die mechanischen Qualitätsparameter, die regelmäßig den Anforderungen in hohem Maße genügen. Insoweit haben die bekannten Kraftfahrzeug-Rohrleitungen sich bewährt. Nichtsdestoweniger werden bei den üblichen fabrikmäßigen oder einbauseitig vorgenommenen Qualitätskontrollen Ausfallerscheinungen festgestellt, und zwar insbes. bei den tiefen Temperaturen von bis minus 40 °C. Die Ausfallerscheinungen bestehen in einem unkontrollierten Abfall der mechanischen Qualitätsparameter mit unkontrollierter Riß- oder Bruchbildung. In neuerer Zeit werden diese Ausfallerscheinungen darauf zurückgeführt (EP 0 245 125, Seite 2, Zeilen 16 bis 26), daß insbes. bei der Kalibrierung des Kunststoffrohres im Zuge der Extrusion eine Kalibrierungsorientierung in einer verhältnismäßig dünnen Oberflächenschicht von 20 bis 200 µm entsteht. Dabei werden vermutlich auch innere Spannungen eingefroren. Werden solche Kunststoffrohre in eine Kraftfahrzeug-Rohrleitung eingebaut, so können die Kalibrierungsorientierung und die damit verbundenen, korrelierten Phänomene, insbes. bei tiefen Temperaturen, die Ausfallerscheinungen auslösen. Um solche Ausfallerscheinungen zu verhindern, geht die herrschende Lehre heute dahin (EP 0 245 125, Seite 2, Zeile 37, bis Seite 4, Zeile 41), nach der Herstellung der Kunststoffrohre die eine Kalibrierungsorientierung aufweisende Oberflächenschicht aufzuschmelzen und danach einer Rekristallisation zu unterwerfen, wodurch die Kalibrierungsorientierung und die damit korrelierten Phänomene beseitigt werden. Das ist aufwendig und verlangt eine besondere Fertigungsstufe. Wo das Aufschmelzen der Oberflächenschicht durch eine Beaufschlagung mit Flammen erfolgt, kann je nach dem eingesetzten Werkstoff nicht ausgeschlossen werden, daß störende chemische Reaktionen auftreten.

Die bekannten Kraftfahrzeug-Rohrleitungen des eingangs beschriebenen Aufbaus und der eingangs beschriebenen Zweckbestimmung zeigen ein weiteres störendes Phänomen: Wird die Kraftfahrzeug-Rohrleitung nach Einbau in das Kraftfahrzeug bestimmungsgemäß oder lediglich zufällig, wenn auch nur bereichsweise, mit einem kraftfahrzeugüblichen Lack bedeckt, so treten unkontrollierte Rißbildungen und Brüche sehr häufig auf, und zwar auch bei verhältnismäßig hohen Temperaturen im Anwendungstemperaturbereich. Das gilt selbst dann, wenn die eine Kalibrierungsorientierung aufweisende Oberflächenschicht des Kunststoffrohres der Kraftfahrzeugrohrleitung durch Wärmebehandlung (EP 0 245 125) rekristallisiert wird.

Der Erfindung liegt die Aufgabe zugrunde, eine Kraftfahrzeug-Rohrleitung des eingangs beschriebenen Aufbaus und der eingangs beschriebenen Zweckbestimmung zu schaffen, die im gesamten Anwendungstemperaturbereich unempfindlich ist gegen kraftfahrzeugübliche Lacke, insbes. Acryllacke, bei bestimmungsgemäßer oder zufälliger Lackierung.

Zur Lösung dieser Aufgabe ist Gegenstand der Erfindung eine Kraftfahrzeug-Rohrleitung aus einem einschichtigen oder einem mehrschichtigen extrudierten Kunststoffrohr vorgegebener Rohrwanddicke sowie mit vorgegebener Härte, Festigkeit, Bruchdehnung und Kerbschlagzähigkeit, welche Rohrleitung für eine vorgegebene Sollfunktion im gesamten Anwendungstemperaturbereich bis unter 40 °C eingerichtet und aus kraftfahrzeugüblichem Rohrwandkunststoff besteht,
wobei auf die Außenfläche des Kunststoffrohres im Wege der Coextrusion bei der Herstellung des Kunststoffrohres eine für die Sollfunktion unerhebliche Rißabsorptionsschicht aus Kunststoff stoffschlüssig aufgebracht ist, die im Vergleich zu dem Rohrwandkunststoff im gesamten Anwendungstemperaturbereich eine um einen Faktor von höchstens 0,8 geringere Härte aufweist und damit weich eingestellt und
wobei das Kunststoffrohr durch die Dicke der Rißabsorptionsschicht, die um einen Faktor von zumindest 0,5 geringer ist als die Rohrwanddicke der einschichtigen oder mehrschichtigen Rohrwand des Kunststoffrohres, im gesamten Anwendungstemperaturbereich unempfindlich eingestellt ist gegen kraftfahrzeugübliche Lacke, insbes. Acryllacke, bei bestimmungsgemäßer oder zufälliger Lackierung. - Die Formulierung "... um einen Faktor von höchstens 0,8 geringere Härte" bedeutet, daß der Faktor auch kleiner sein kann als 0,8.

Die Rißbildung in einem Werkstoff verbraucht Energie und erhöht die Entropie. Es muß Arbeit geleistet werden, um den Riß zu erzeugen. Die Verformung einer Kraftfahrzeug-Rohrleitung leistet diese Arbeit. Insbesondere im Bereich tiefer Temperaturen bricht die Lackschicht. Erfindungsgemäß absorbiert die Rißabsorptionsschicht den von den Rissen in der Lackschicht ausgehenden Energie- bzw. Entropiefluß. Die Risse, die in der Lackschicht entstehen, pflanzen sich überraschenderweise in das eigentliche Kunststoffrohr nicht fort.

Die Erfindung betrifft grundsätzlich Kraftfahrzeug-Rohrleitungen, deren Kunststoffrohre auf bekannte Art und Weise hergestellt sind. Insoweit lassen sich die vorgegebenen und vorgeschriebenen mechanischen Qualitätsparameter auf bekannte Weise einrichten und kann insoweit auf bekannte Technologien zurückgegriffen werden. Es brauchen jedoch die herstellungsbedingten Kalibrierorientierungen nicht in Kauf genommen und nicht nachträglich beseitigt zu werden, weil sie gar nicht erst auftreten. Das beruht darauf, daß die im Wege der Coextrusion aufgebrachte dünne Rißabsorptionsschicht aus weichem Kunststoff in der Außenschicht des eigentlichen Kunststoffrohres die Entstehung von Kalibrierorientierungen verhindert hat. Darüber hinaus ist das eigentliche Kunststoffrohr durch die Rißabsorptionsschicht schützend kaschiert. Mechanische Beschädigungen der Oberfläche eines erfindungsgemäßen, mit der Rißabsorptionsschicht versehenen Kunststoffrohres betreffen regelmäßig nur die Rißabsorptionsschicht und können daher in dem eigentlichen Kunststoffrohr Kerbspannungen oder andere Störungen nicht auslösen.

Im einzelnen bestehen im Rahmen der Erfindung mehrere Möglichkeiten der weiteren Ausbildung und Gestaltung der Kraftfahrzeug-Rohrleitung. Grundsätzlich kann auf die bekannten und bewährten Rohrwandkunststoffe zurückgegriffen werden, vorzugsweise auf einen Rohrwandkunststoff, wie er im Patentanspruch 2 spezifiziert ist. Dabei kann das Kunststoffrohr eine Wanddicke in dem in Anspruch 3 angegebenen Bereich aufweisen.

Da bei der erfindungsgemäßen Kraftfahrzeug-Rohrleitung das eigentliche Kunststoffrohr zwar von den eingangs beschriebenen Mängeln befreit, im übrigen aber unverändert ist, können die üblichen mechanischen Qualitätsparameter eingehalten und sogar verbessert werden. Verbessert deshalb, weil die eine störende Kalibrierorientierung aufweisende Oberflächenschicht fehlt. Die mechanischen Qualitätsparameter im einzelnen können so gewählt werden, wie es der Patentanspruch 4 angibt.

Im Rahmen der Erfindung wird zweckmäßigerweise mit einer Rißabsorptionsschicht aus Kunststoff entsprechend dem Patentanspruch 5 gearbeitet. Die Dicke der Rißabsorptionsschicht soll in dem Bereich liegen, den der Patentanspruch 6 angibt.

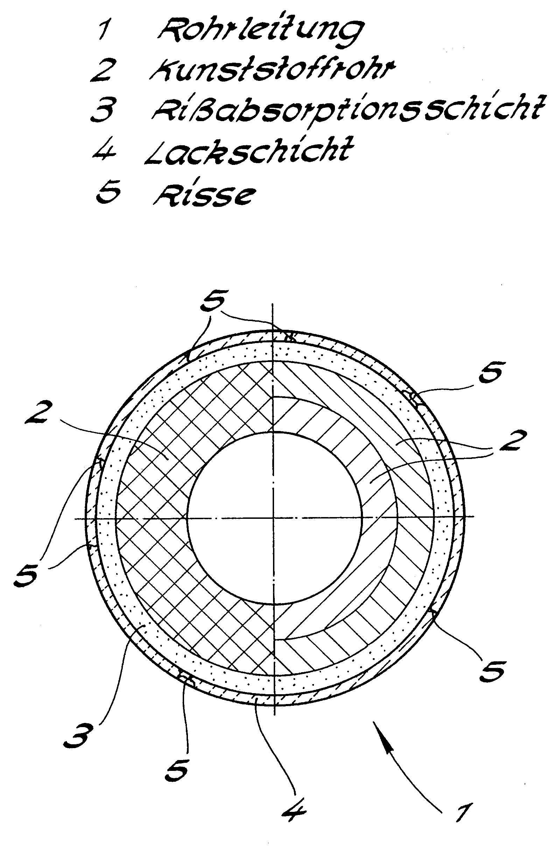

Im folgenden wird die Erfindung anhand einer lediglich ein Ausführungsbeispiel darstellenden Zeichnung ausführlicher erläutert. - Die einzige Figur zeigt in starker Vergrößerung einen Querschnitt durch eine erfindungsgemäße Kraftfahrzeug-Rohrleitung.

Die in der Figur dargestellte Kraftfahrzeug-Rohrleitung besteht aus einem im linken Teil der Figur einschichtigen, im rechten Teil der Figur mehrschichtigen Kunststoffrohr vorgegebener Rohrwanddicke mit vorgegebener Härte, Festigkeit, Bruchdehnung und Kerbschlagzähigkeit. Die Rohrleitung ist für eine der eingangs angegebenen Sollfunktionen eingerichtet, und zwar im gesamten Anwendungstemperaturbereich bis minus 40 °C. Sie besteht aus einem kraftfahrzeugüblichen Rohrwandkunststoff. Insoweit wird auch auf die eingangs angegebenen Literaturstellen verwiesen.

Auf die Oberfläche des eigentlichen Kunststoffrohres ist im Wege der Coextrusion bei der Herstellung des Kunststoffrohres eine Rißabsorptionsschicht aus Kunststoff stoffschlüssig aufgebracht. Darunter wird verstanden, daß der Anschluß ohne Schichtentrennung, gleichsam mit molekularer Verschmelzung, erfolgt. Die Rißabsorptionsschicht ist besonders eingestellt. Sie weist im Vergleich zu dem Rohrwandkunststoff im gesamten Anwendungstemperaturbereich eine geringere Härte auf und ist damit verhältnismäßig weich eingestellt. Insoweit wird auf den Patentanspruch 1 verwiesen. Aber auch die Dicke der Rißabsorptionsschicht ist besonders eingestellt. Sie ist geringer als es der Rohrwanddicke der einschichtigen oder mehrschichtigen Rohrwand des Kunststoffrohres entspricht. Die Rißabsorptionsschicht darf nicht zu dünn sein, soll aber auch nicht zu dick sein, wozu auf den Patentanspruch 1 verwiesen wird. Die geeignete Dicke kann durch Versuche im Labor ohne weiteres festgestellt werden. Die Rißabsorptionsschicht verhindert, daß bei zufälliger oder bestimmungsgemäßer Lackierung in der Lackschicht auftretende Risse sich in das Kunststoffrohr hinein fortpflanzen.

## Patentansprüche

1. Kraftfahrzeug-Rohrleitung aus einem einschichtigen oder einem mehrschichtigen extrudierten Kunststoffrohr vorgegebener Rohrwanddicke sowie mit vorgegebener Härte, Festigkeit, Bruchdehnung und Kerbschlagzähigkeit, welche Rohrleitung für eine vorgegebene Sollfunktion im gesamten Anwendungstemperaturbereich bis unter 40 °C eingerichtet und aus kraftfahrzeugüblichem Rohrwandkunststoff besteht,
wobei auf die Außenfläche des Kunststoffrohres im Wege der Coextrusion bei der Herstellung des Kunststoffrohres eine für die Sollfunktion unerhebliche Rißabsorptionsschicht aus Kunststoff stoffschlüssig aufgebracht ist, die im Vergleich zu dem Rohrwandkunststoff im gesamten Anwendungstemperaturbereich eine um einen Faktor von höchstens 0,8 geringere Härte aufweist und damit weich eingestellt und
wobei das Kunststoffrohr durch die Dicke der Rißabsorptionsschicht, die um einen Faktor von zumindest 0,5 geringer ist als die Rohrwanddicke der einschichtigen oder mehrschichtigen Rohrwand des Kunststoffrohres, im gesamten Anwendungstemperaturbereich unempfindlich eingestellt ist gegen kraftfahrzeugübliche Lacke, insbes. Acryllacke, bei bestimmungsgemäßer oder zufälliger Lackierung.

2. Kraftfahrzeug-Rohrleitung nach Anspruch 1, wobei das Kunststoffrohr aus einem Rohrwandkunststoff der Gruppe PA 6, PA 66, PA 46, PA 69, PA 610, PA 612 PA 6-3T, PA 11, PA 12, beschrieben in DIN 16773 Teil 1, der Gruppe PP beschrieben in DIN 16774, der Gruppe PET PBT, beschrieben in DIN 16779, der Gruppe Polyesterelastomere TEEE, beschrieben in ASTM D1972 oder kompatiblen Mischungen davon besteht.

3. Kraftfahrzeug-Rohrleitung nach einem der Ansprüche 1 oder 2, wobei das Kunststoffrohr eine Wanddicke im Bereich von 0,5 bis 4 mm aufweist.

4. Kraftfahrzeug-Rohrleitung nach einem der Ansprüche 1 bis 3, wobei das Kunststoffrohr aufweist:
eine Härte im Bereich von Shore D30 bis Shore D85,
eine Festigkeit im Bereich von 10N/mm² bis 60N/mm²,
eine Bruchdehnung im Bereich von 30 % bis 600 % und
eine Kerbschlagzähigkeit bei minus 40 °C von 2 kJ/m² bis nicht gebrochen
Härte definiert und gemessen nach DIN 53505, Festigkeit definiert und gemessen nach DIN 53455, Bruchdehnung definiert und gemessen nach DIN 53455, Kerbschlagzähigkeit definiert und gemessen nach ISO180/1A.

5. Kraftfahrzeug-Rohrleitung nach einem der Ansprüche 1 bis 4, wobei die Rißabsorptionsschicht aus einem Kunststoff der Gruppe PA 6, PA 66, PA 46, PA 69, PA 610, PA 612 PA 6-3T, PA 11, PA 12, beschrieben in DIN 16773 Teil 1 der Gruppe PP, beschrieben in DIN 16774, der Gruppe PET PBT, beschrieben in DIN 16779, der Gruppe Polyesterelastomere TEEE beschrieben in ASTM D1972, oder kompatiblen Mischungen davon besteht und ihrerseits mit dem Rohrwandkunststoff kompatibel ausgewählt ist.

6. Kraftfahrzeug-Rohrleitung nach einem der Ansprüche 3 bis 5, wobei die Rißabsorptionsschicht eine Dicke im Bereich von 0,1 bis 0,2 mm aufweist.
